(19) 

Europäisches
Patentamt
European
Patent Office
Office européen
des brevets

(11) **EP 3 620 256 A1**

(12) **EUROPEAN PATENT APPLICATION**
published in accordance with Art. 153(4) EPC

(43) Date of publication:
**11.03.2020  Bulletin 2020/11**

(21) Application number: **18794059.8**

(22) Date of filing: **26.04.2018**

(51) Int Cl.:
**B23K 35/30** (2006.01)          **B23K 9/23** (2006.01)
**C22C 38/00** (2006.01)          **C22C 38/04** (2006.01)

(86) International application number:
**PCT/JP2018/017106**

(87) International publication number:
**WO 2018/203513 (08.11.2018 Gazette 2018/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **01.05.2017   JP 2017091376**

(71) Applicant: **Kabushiki Kaisha Kobe Seiko Sho
(Kobe Steel, Ltd.)
Kobe-shi, Hyogo 651-8585 (JP)**

(72) Inventors:
• **YASHIMA Takashi**
  **Kanagawa 251-8551 (JP)**
• **SUZUKI Reiichi**
  **Kanagawa 251-8551 (JP)**
• **MIYATA Minoru**
  **Kanagawa 251-8551 (JP)**

(74) Representative: **Müller-Boré & Partner
Patentanwälte PartG mbB
Friedenheimer Brücke 21
80639 München (DE)**

(54) **ARC WELDING METHOD AND WELDING WIRE**

(57)     The present invention relates to a method for arc-welding a steel plate having a C content of 0.08-0.30 % by mass, wherein the arc welding method comprises welding under a condition whereby X represented by formula (1) is 200 or less using a welding wire in which the total content of Cr and Ni thereof is 1.00% by mass or greater. (1): $X = 0.8 \times (300 - 279[C]_W - 25[Si]_W - 35[Mn]_W - 49[Ni]_W - 47[Cr]_W - 61[Mo]_W) + 0.2 \times (300 - 279[C]_{BM} - 25[Si]_{BM} - 35[Mn]_{BM} - 49[Ni]_{BM} - 47[Cr]_{BM} - 61[MO]_{BM})$ (where $[C]_W$, $[Si]_W$, $[Mn]_W$, $[Ni]_W$, $[Cr]_W$, $[Mo]_W$, $[C]_{BM}$, $[Si]_{BM}$, $[Mn]_{BM}$, $[Ni]_{BM}$, $[Cr]_{BM}$, and $[Mo]_{BM}$ are defined in the specification).

EP 3 620 256 A1

**Description**

Technical Field

The present invention relates to an arc welding method and a welding wire.

Background Art

In the field of automobiles, weight reduction of vehicle bodies is being advanced in connection with recent trends such as a preference for low fuel consumption and exhaust gas regulations. In connection with this, with regard to thin steel sheets that are used in vehicle body parts, too, a high-tensile-strength steel sheet, which contains a higher amount of carbon and therefore has a higher tensile strength than steel sheets of the related art, is increasingly employed. It is expected that the strength increase will be further advanced in the future. As the strength increase is advanced, the need increases for ensuring a high welded joint strength and suppressing delayed fracture and delayed cracking due to hydrogen embrittlement, for the portion where steel sheets are joined together. For welding of steel sheets for vehicle bodies of automobiles and the like, arc welding, spot welding, or the like is typically used. However, no matter which welding method is used, there remains the problem of preventing the occurrence of delayed fracture due to hydrogen embrittlement.

With regard to suppression of delayed fracture in a high-tensile-strength steel sheet, Patent Literature 1, for example, describes the following. In spot welding of high-strength steel sheets containing carbon in an amount of 0.15 % or greater and having a tensile strength of 980 MPa or greater, a high delayed fracture resistance is consistently achieved while suppressing variations in hardness reduction resulting from tempering and shortening the welding time. Furthermore, Patent Literature 2 relates to arc welding and describes the following. Not only the composition of the chemical components but also the number density and the volume fraction of retained austenite grains are appropriately controlled. This can realize a weld metal that exhibits excellent resistance to hydrogen embrittlement susceptibility while having a high strength, that is, greater than 780 MPa.

Citation List

Patent Literature

   PTL 1: International Publication No. 2014/171495
   PTL 2: Japanese Unexamined Patent Application Publication No. 2013-173179

Summary of Invention

Technical Problem

However, Patent Literature 1 relates to spot welding. Thus, the method can be used only for point welding and therefore, unlike arc welding, is not versatile so as to be used for both point welding and linear welding.

Furthermore, according to Patent Literature 2, a resistance to hydrogen embrittlement susceptibility is achieved by arc welding, but it is necessary to appropriately control the structure of retained austenite of the weld metal. In particular, with point welding, the welding conditions are limited, and, therefore, controlling the structure of the weld metal is difficult.

An object of the present invention is to provide an arc welding method and a welding wire that, for welding of high-tensile-strength steel sheets, readily suppress hydrogen embrittlement of the weld metal, thereby preventing the occurrence of cracking, regardless of whether the welding is point welding or linear welding.

Solution to Problem

The austenite structure has a feature that the hydrogen solubility limit thereof is higher than those of the ferrite structure and the martensite structure. Thus, in a weld metal containing an austenite structure, the amount of diffusive hydrogen, which is a major cause of hydrogen embrittlement, is reduced. The present inventors focused on this point and found the following. The amount of retained austenite in a weld metal can be controlled readily and appropriately by suitably adjusting the relationship between the contents of alloying elements that enhance hardenability, such as Ni and Cr, present in a welding wire and the contents of these alloying elements present in high-tensile-strength steel sheets, and consequently, hydrogen embrittlement of the weld metal can be suppressed. With this finding, the present invention was made.

That is, the present invention relates to an arc welding method for arc welding a steel sheet having a C content of 0.08 to 0.30 mass%. The arc welding method includes performing welding by using a welding wire in which a total content of Cr and Ni is greater than or equal to 1.00 mass% and under conditions in which X is less than or equal to 200, X being represented by equation (1) below.

$$X = 0.8 \times (300 - 279[C]_W - 25[Si]_W - 35[Mn]_W - 49[Ni]_W - 47[Cr]_W - 61[Mo]_W) + 0.2 \times$$
$$(300 - 279[C]_{BM} - 25[Si]_{BM} - 35[Mn]_{BM} - 49[Ni]_{BM} - 47[Cr]_{BM} - 61[Mo]_{BM}) \quad (1)$$

(Here, $[C]_W$, $[Si]_W$, $[Mn]_W$, $[Ni]_W$, $[Cr]_W$, and $[Mo]_W$ represent, respectively, the contents (mass%) of C, Si, Mn, Ni, Cr, and Mo in the welding wire, and $[C]_{BM}$, $[Si]_{BM}$, $[Mn]_{BM}$, $[Ni]_{BM}$, $[Cr]_{BM}$, and $[Mo]_{BM}$ represent, respectively, the contents (mass%) of C, Si, Mn, Ni, Cr, and Mo in the steel sheet.)

With the arc welding method, the martensitic transformation temperature (Ms transformation temperature) of the weld metal is lowered, which leads to formation of so-called retained austenite, as a result of failure to undergo transformation during the cooling process. Hydrogen in the weld metal is dissolved into the retained austenite, and as a result, hydrogen embrittlement due to diffusive hydrogen is suppressed.

In the arc welding method, X may be greater than or equal to 0.

In the arc welding method, a carbon equivalent $Ceq_{BM}$ of the steel sheet may be 0.30 to 0.70, and a carbon equivalent $Ceq_W$ of the welding wire may be 0.20 to 1.30. The carbon equivalent $Ceq_{BM}$ is represented by equation (2) below, and the carbon equivalent Ceqw is represented by equation (3) below.

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5 \quad (2)$$

(Here, $[C]_{BM}$, $[Mn]_{BM}$, $[Cu]_{BM}$, $[Ni]_{BM}$, $[Cr]_{BM}$, $[Mo]_{BM}$, and $[V]_{BM}$ represent, respectively, the contents (mass%) of C, Mn, Cu, Ni, Cr, Mo, and V in the steel sheet.)

$$Ceqw = [C]_W + [Mn]_W/6 + ([Cu]_W + [Ni]_W)/15 + ([Cr]_W + [Mo]_W + [V]_W)/5 \quad (3)$$

(Here, $[C]_W$, $[Mn]_W$, $[Cu]_W$, $[Ni]_W$, $[Cr]_W$, $[Mo]_W$, and $[V]_W$ represent, respectively, the contents (mass%) of C, Mn, Cu, Ni, Cr, Mo, and V in the welding wire.)

In the arc welding method, the steel sheet may have a sheet thickness of 0.5 mm or greater and 4.0 mm or less.

In the arc welding method, to obtain a weld length of greater than 20 mm, linear welding may be performed under conditions in which a welding heat input is 0.3 kJ/cm or greater and 15 kJ/cm or less. Furthermore, the linear welding may be performed under conditions in which a welding speed is 45 cm/minute or greater and 150 cm/minute or less.

Furthermore, in the arc welding method, point welding may be performed under conditions in which a welding time is 0.2 seconds or greater and 4.0 seconds or less.

Furthermore, the present invention also relates to a welding wire for arc welding a steel sheet containing at least, in mass%, C: 0.08 to 0.30 %, Si: 2.00 % or less, and Mn: 0.90 to 3.00 %, with a balance of Fe and incidental impurities.

The welding wire contains, in mass%, relative to a total mass of the wire,

C: 0.08 to 0.30 %,
Si: 0.10 to 2.00 %,
Mn: 0.50 to 2.50 %,
Ni: 12.00 % or less,
Cr: 12.00 % or less, and
Mo: 1.50 % or less,

with a balance of Fe and incidental impurities.

In the welding wire, a total content of Cr and Ni is 1.00 to 24.00 %, and

the welding wire satisfies a condition that X is 0.6 or greater and 200 or less, X being represented by equation (1) below.

$$X = 0.8 \times (300 - 279[C]_W - 25[Si]_W - 35[Mn]_W - 49[Ni]_W - 47[Cr]_W - 61[Mo]_W) + 0.2 \times$$
$$(300 - 279[C]_{BM} - 25[Si]_{BM} - 35[Mn]_{BM} - 49[Ni]_{BM} - 47[Cr]_{BM} - 61[Mo]_{BM}) \quad (1)$$

(Here, $[C]_W$, $[Si]_W$, $[Mn]_W$, $[Ni]_W$, $[Cr]_W$, and $[Mo]_W$ represent, respectively, the contents (mass%) of C, Si, Mn, Ni, Cr, and Mo in the welding wire, and $[C]_{BM}$, $[Si]_{BM}$, $[Mn]_{BM}$, $[Ni]_{BM}$, $[Cr]_{BM}$, and $[Mo]_{BM}$ represent, respectively, the contents (mass%) of C, Si, Mn, Ni, Cr, and Mo in the steel sheet.)
The welding wire may further contain, in mass%, at least one selected from the group consisting of Ti: 0.50 % or less, V: 1.00 % or less, Nb: 1.00 % or less, Zr: 0.50 % or less, W: 1.00 % or less, and B: 0.0050 % or less.

Advantageous Effects of Invention

Arc welding methods and welding wires of the present invention readily suppress hydrogen embrittlement of the weld metal even in welding of high-tensile-strength steel sheets, thereby suppressing delayed fracture and preventing the occurrence of delayed cracking, regardless of whether the welding is point welding or linear welding.

Description of Embodiments

An embodiment of the present invention will now be described in detail. Note that the present invention is not limited to the embodiment described below. Furthermore, in this specification, "percentage on a mass basis (mass%)" has the same meaning as "percentage on a weight basis (wt%)".
The arc welding method of the present embodiment (hereinafter also referred to as the "present arc welding method") is to be applied to steel sheets having a C (carbon) content of 0.08 to 0.30 mass%. When the C content of a steel sheet is 0.08 mass% or greater, the steel sheet has sufficient strength and serves as a high-tensile-strength steel sheet. Furthermore, when the C content is 0.30 mass% or less, the steel sheet has a delayed fracture resistance that is comparable to that of a steel sheet having a C content in the steel sheet of 0.08 mass%, and in addition, the steel sheet has a reduced tendency to experience delayed fracture.
Furthermore, the steel grade of the steel sheet that is used in the present arc welding method is not particularly limited provided that the C content is 0.08 to 0.30 mass%, and, in addition to C, any of various alloying components, such as Si, Mn, Ni, Cr, and Mo, may be present therein. With regard to the alloying components that may be present in the steel sheet, the contents of C, Si, Mn, Ni, Cr, and Mo, which are chemical components effective for enhancing hardenability and lowering the Ms transformation temperature, satisfy Equation (1), in association with the contents of C, Si, Mn, Ni, Cr, and Mo present in a welding wire to be used. Equation (1) will be described later.
An example of the steel sheet is a steel sheet having a composition containing at least, in mass%, C: 0.08 to 0.30 %, Si: 2.00 % or less, and Mn: 0.90 to 3.00 %, with the balance being Fe and incidental impurities.
In the present arc welding method, the sheet thickness (thickness) of the steel sheet is not particularly limited provided that the sheet thickness is within a range in which arc welding can be applied; with the present arc welding method, the above-described effect can be produced even in cases where the method is applied to a steel sheet having a particularly thin sheet thickness (thin steel sheet). The sheet thickness of the steel sheet is preferably greater than or equal to 0.5 mm and more preferably greater than or equal to 0.6 mm, particularly in terms of ensuring the strength and rigidity required of components in automotive applications. Furthermore, from the standpoint of achieving both the necessary strength and a reduction in the sheet thickness particularly in consideration of weight reductions in automotive applications, the sheet thickness is preferably less than or equal to 4.0 mm and more preferably less than or equal to 3.0 mm.
The strength class of the steel sheet to which the present arc welding method is applied is not particularly limited; in particular, in view of strength increases in automotive applications, the tensile strength of the steel sheet is preferably greater than or equal to 440 MPa (440 MPa class), more preferably greater than or equal to 590 MPa (590 MPa class), and even more preferably greater than or equal to 980 MPa (980 MPa class).
Furthermore, in the present arc welding method, welding is performed on the steel sheet by using a welding wire in which the total content of Cr and Ni is greater than or equal to 1.00 mass% and under conditions in which X, represented by Equation (1) below, is less than or equal to 200.

$$X = 0.8 \times (300 - 279[C]_W - 25[Si]_W - 35[Mn]_W - 49[Ni]_W - 47[Cr]_W - 61[Mo]_W) + 0.2 \times$$

$$(300 - 279[C]_{BM} - 25[Si]_{BM} - 35[Mn]_{BM} - 49[Ni]_{BM} - 47[Cr]_{BM} - 61[Mo]_{BM}) \quad (1)$$

(Here, $[C]_W$, $[Si]_W$, $[Mn]_W$, $[Ni]_W$, $[Cr]_W$, and $[Mo]_W$ represent, respectively, the contents (mass%) of C, Si, Mn, Ni, Cr, and Mo in the welding wire, and $[C]_{BM}$, $[Si]_{BM}$, $[Mn]_{BM}$, $[Ni]_{BM}$, $[Cr]_{BM}$, and $[Mo]_{BM}$ represent, respectively, the contents (mass%) of C, Si, Mn, Ni, Cr, and Mo in the steel sheet.)

Cr and Ni are elements that lower the martensitic transformation temperature, thereby stabilizing the austenite phase. In the present arc welding method, the total content of Cr and Ni in the welding wire is specified to be greater than or equal to 1.00 mass% to lower the martensitic transformation temperature of the weld metal, thereby forming retained austenite. It is preferable that the total content of Cr and Ni in the welding wire be greater than or equal to 1.20 mass%. On the other hand, from the standpoint of an appropriate hardenability, the total content of Cr and Ni in the welding wire is preferably less than or equal to 24.00 mass%, more preferably less than or equal to 20.00 mass%, and even more preferably less than or equal to 19.00 mass%. Note that only either Cr or Ni may be included or both Cr and Ni may be included, provided that the total content of Cr and Ni is greater than or equal to 1.00 mass%.

With regard to the wire composition of the welding wire that can be used in the present arc welding method, it is sufficient that the total content of Cr and Ni be greater than or equal to 1.00 mass%, and there are no particular limitations on the other chemical components; for example, in addition to Cr and Ni, chemical components effective for enhancing hardenability and lowering the Ms transformation temperature, such as C, Si, Mn, and Mo, may be included. The following description describes a wire composition of a welding wire according to an aspect of the present embodiment. Note that with regard to the wire composition described below, the content of each of the components is expressed in mass% of the total mass of the wire unless otherwise specified.

Cr is an element effective for lowering the martensitic transformation temperature of the weld metal. Note that in the relationship between Cr and Ni in terms of the total content, Cr may not be necessarily included provided that the Ni content is greater than or equal to 1.00%; however, it is preferable, in terms of effectively producing the above-described effect, that the Cr content be greater than or equal to 0.10 %. On the other hand, since Cr is a ferrite-stabilizing element, from the standpoint of more stably forming retained austenite, the Cr content is preferably less than or equal to 12.00 %, more preferably less than or equal to 10.00 %, and even more preferably less than or equal to 9.50 %.

Ni is an element effective for lowering the martensitic transformation temperature of the weld metal, thereby forming retained austenite. Note that in the relationship between Cr and Ni in terms of the total content, Ni may not be necessarily included provided that the Cr content is greater than or equal to 1.00 %, and therefore no lower limit is specified. Furthermore, Ni contributes to improving strength. Accordingly, from the standpoint of preventing weld cracking due to excessive strength, the Ni content is preferably less than or equal to 12.00 %, more preferably less than or equal to 10.00 %, and even more preferably less than or equal to 9.50 %.

C is an element that stabilizes austenite but is also an element that forms carbides in the weld metal and induces a martensitic transformation of the weld metal. Accordingly, in the wire of the present aspect, the C content is preferably less than or equal to 0.50 % and more preferably less than or equal to 0.30 %. Furthermore, the lower limit of the C content is not particularly limited, but, for example, the C content is greater than or equal to 0.01 % and preferably greater than or equal to 0.08 %.

Si is a ferrite-stabilizing element and is an element that acts as a deoxidizer and improves the shape of the bead. In the wire of the present aspect, Si may not be included; however, in the case where Si is included, the Si content is preferably greater than or equal to 0.10 % from the standpoint of deoxidation. On the other hand, in terms of suppressing slag formation and more stably forming retained austenite, it is preferable that the Si content be less than or equal to 2.00 %.

As with C, Mn is an austenite-stabilizing element and is an element that produces an effect of increasing the amount of dissolved N, which has an effect of stabilizing the austenite phase present in the matrix. In the wire of the present aspect, the Mn content is preferably greater than or equal to 0.50 % from the standpoint of deoxidation. On the other hand, from the standpoint of suppressing slag formation, it is preferable that the Mn content be less than or equal to 2.50 %.

Mo is a ferrite-stabilizing element and is an element that contributes to improving strength. In the wire of the present aspect, Mo may not be included; however, in the case where Mo is included, the Mo content is preferably greater than or equal to 0.50 % from the standpoint of ensuring strength. On the other hand, from the standpoint of preventing weld cracking due to excessive strength, it is preferable that the Mo content be less than or equal to 1.50 %.

Furthermore, the welding wire of the present aspect may further contain, in addition to the chemical components described above, at least one element added in an amount in the range described below; the at least one element is selected from among Ti, V, Nb, Zr, W, and B.

Ti and Zr form carbides and trap hydrogen. On the other hand, Ti and Zr are strong deoxidizing elements, and therefore, if excessively added, there is a possibility that large quantities of slag may form. Accordingly, in the case where Ti and/or Zr are added, it is preferable that the amounts of addition of Ti and Zr be each less than or equal to 0.50 %.

V and Nb also form carbides, thereby trapping hydrogen. On the other hand, V and Nb have an effect of improving strength, and therefore, if excessively added, there is a possibility that strength may become excessive, which may result in the occurrence of weld cracking. Accordingly, in the case where V and/or Nb are added, it is preferable that the amounts of addition of V and Nb be each less than or equal to 1.00 %.

W may be added to improve strength. However, if excessively added, there is a possibility that strength may become excessive, which may result in the occurrence of weld cracking. Accordingly, in the case where W is added, it is preferable that the amount of addition be less than or equal to 1.00 %.

As with W, B may be added to improve strength. However, if excessively added, there is a possibility that strength may become excessive, which may result in the occurrence of weld cracking. Accordingly, in the case where B is added, it is preferable that the amount of addition be less than or equal to 0.0050 %.

Furthermore, the balance of the welding wire of the present aspect is Fe and incidental impurities, such as P and S.

Furthermore, in the present arc welding method, it is important that a parameter X be less than or equal to 200. The parameter X is calculated according to Equation (1) below by using $[C]_W$, $[Si]_W$, $[Mn]_W$, $[Ni]_W$, $[Cr]_W$, and $[Mo]_W$, which are the contents (mass%) of C, Si, Mn, Ni, Cr, and Mo in the welding wire, and $[C]_{BM}$, $[Si]_{BM}$, $[Mn]_{BM}$, $[Ni]_{BM}$, $[Cr]_{BM}$, and $[Mo]_{BM}$, which are the contents (mass%) of C, Si, Mn, Ni, Cr, and Mo in the steel sheet.

$$X = 0.8 \times (300 - 279[C]_W - 25[Si]_W - 35[Mn]_W - 49[Ni]_W - 47[Cr]_W - 61[Mo]_W) + 0.2 \times$$
$$(300 - 279[C]_{BM} - 25[Si]_{BM} - 35[Mn]_{BM} - 49[Ni]_{BM} - 47[Cr]_{BM} - 61[Mo]_{BM}) \quad (1)$$

X is an index for retained austenite (retained $\gamma$) of the weld metal. X was discovered by the present inventors empirically by experimentation, by focusing on the content of each of the components, C, Si, Mn, Ni, Cr, and Mo, which lower the martensitic transformation temperature.

In the present arc welding method, in consideration of the composition of the chemical components of the steel sheet, the contents of the chemical components present in the welding wire are appropriately adjusted in a manner such that X is less than or equal to 200, and consequently, the martensitic transformation temperature of the weld metal is lowered, and, therefore, retained austenite, which has a high hydrogen solubility limit, can be sufficiently formed. As a result, diffusive hydrogen in the weld metal, which is a cause of hydrogen embrittlement, is suppressed, thereby preventing the occurrence of cracking due to hydrogen embrittlement. From this standpoint, X is less than or equal to 200 and preferably less than or equal to 155.

On the other hand, the lower limit of X is not particularly limited, but, if X is too low, the amount of precipitated martensite increases excessively, which results in excessive hardening of the weld metal, and thus, there is a possibility that the mechanical properties of the welded joint may not be sufficiently exhibited, and consequently, brittle fracture may occur. From this standpoint, X is preferably greater than or equal to 0, more preferably greater than or equal to 0.6, and even more preferably greater than or equal to 100.

Furthermore, a carbon equivalent $Ceq_{BM}$ of the steel sheet is preferably greater than or equal to 0.30 and more preferably greater than or equal to 0.40, from the standpoint of hardenability. On the other hand, from the standpoint of preventing delayed cracking, the carbon equivalent $Ceq_{BM}$ is preferably less than or equal to 0.70 and more preferably less than or equal to 0.60.

Note that, in this specification, the carbon equivalent $Ceq_{BM}$ of a steel sheet is represented by Equation (2) below.

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5$$
$$(2)$$

(Here, $[C]_{BM}$, $[Mn]_{BM}$, $[Cu]_{BM}$, $[Ni]_{BM}$, $[Cr]_{BM}$, $[Mo]_{BM}$, and $[V]_{BM}$ represent, respectively, the contents (mass%) of C, Mn, Cu, Ni, Cr, Mo, and V in the steel sheet.)

Furthermore, a carbon equivalent $Ceq_W$ of the welding wire is preferably greater than or equal to 0.20 from the standpoint of hardenability. On the other hand, from the standpoint of preventing delayed cracking, the carbon equivalent $Ceq_W$ is preferably less than or equal to 1.30. Note that, in this specification, the carbon equivalent $Ceq_W$ of a welding wire is represented by Equation (3) below.

$$Ceq_W = [C]_W + [Mn]_W/6 + ([Cu]_W + [Ni]_W)/15 + ([Cr]_W + [Mo]_W + [V]_W)/5 \quad (3)$$

(Here, $[C]_W$, $[Mn]_W$, $[Cu]_W$, $[Ni]_W$, $[Cr]_W$, $[Mo]_W$, and $[V]_W$ represent, respectively, the contents (mass%) of C, Mn, Cu, Ni, Cr, Mo, and V in the welding wire.)

As the present arc welding method, linear welding may be performed or point welding (arc-spot welding) may be performed.

In the case where linear welding is performed, the weld length (bead length) is not particularly limited; in the present invention, in the case where the weld length is greater than 20 mm, the welding is linear welding, and in the case where the weld length is not greater than 20 mm, the welding is point welding.

Furthermore, in the case of performing linear welding, the welding heat input is not particularly limited. However, if the welding heat input is too low, the weld metal becomes brittle as a result of being quenched, and thus, there is a possibility that the mechanical properties of the welded joint may deteriorate. From this standpoint, it is preferable that the welding heat input be greater than or equal to 0.3 kJ/cm.

On the other hand, if the welding heat input is too high, the cooling rate decreases, which suppresses the formation of retained austenite, and therefore, there is a possibility that the effects described above may not be sufficiently produced. From this standpoint, it is preferable that the welding heat input be less than or equal to 15 kJ/cm.

Also, in the case of performing linear welding, the welding speed is not particularly limited. However, if the welding speed is too high, the weld metal becomes brittle as a result of being quenched, and thus, there is a possibility that the mechanical properties of the welded joint may deteriorate. From this standpoint, it is preferable that the welding speed be greater than or equal to 45 cm/minute.

On the other hand, if the welding speed is too low, the cooling rate decreases, which suppresses the formation of retained austenite, and therefore, there is a possibility that the effects described above may not be sufficiently produced. From this standpoint, it is preferable that the welding speed be less than or equal to 150 cm/minute.

Furthermore, in the case where point welding is performed, the welding time is not particularly limited. However, if the welding time is too short, the weld metal becomes brittle as a result of being quenched, and thus, there is a possibility that the mechanical properties of the welded joint may deteriorate. From this standpoint, it is preferable that the welding time be greater than or equal to 0.2 seconds.

On the other hand, if the welding time is too long, the cooling rate decreases, which suppresses the formation of retained austenite, and therefore, there is a possibility that the effects described above may not be sufficiently produced. From this standpoint, it is preferable that the welding time be less than or equal to 4.0 seconds.

The arc voltage and the welding current for performing the welding are not particularly limited and may be appropriately set in consideration of the desired welding heat input. The arc voltage is, for example, within a range of 15 to 30 V, and the welding current is, for example, within a range of 80 to 300 A.

The present arc welding method may be any of the following: MAG welding, MIG welding, and TIG welding, for example.

As the shielding gas, a known shielding gas may be appropriately selected and used, in accordance with the type of welding, such as MAG welding, MIG welding, or TIG welding. Examples of known shielding gases include inert gases, such as Ar and He, $CO_2$, and gas mixtures of an inert gas and $CO_2$.

EXAMPLES

The present invention will now be described in more detail with reference to examples. However, the present invention is not limited to the examples and may be implemented with changes that may be made to the extent that falls within the spirit of the present invention. All of such changes are encompassed within the technical scope of the present invention.

Table 1 shows the composition (the balance is iron and incidental impurities) and the strength class of each of the steel sheets, A to F. Note that, in Table 1, "-" indicates that the content of the component was at a level that is considered an impurity.

Furthermore, Table 1 also shows $X_{BM}$, which is calculated according to $300-279[C]_{BM} - 25[Si]_{BM} - 35[Mn]_{BM} - 49[Ni]_{BM} - 47[Cr]_{BM} - 61[Mo]_{BM}$. Note that $[C]_{BM}$, $[Si]_{BM}$, $[Mn]_{BM}$, $[Ni]_{BM}$, $[Cr]_{BM}$, and $[Mo]_{BM}$ represent, respectively, the contents (mass%) of C, Si, Mn, Ni, Cr, and Mo in the steel sheet.

Furthermore, the carbon equivalent $Ceq_{BM}$ of the steel sheet used in each of the examples was calculated according to Equation (2) below and is also shown in Table 1.

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5$$

(2)

(Here, $[C]_{BM}$, $[Mn]_{BM}$, $[Cu]_{BM}$, $[Ni]_{BM}$, $[Cr]_{BM}$, $[Mo]_{BM}$, and $[V]_{BM}$ represent, respectively, the contents (mass%) of C, Mn, Cu, Ni, Cr, Mo, and V in the steel sheet.)

[Table 1]

Table 1

| Steel grade | Composition (mass%) (Balance is Fe and incidental impurities) | | | | | | Strength class (MPa) | $X_{BM}$ | $Ceq_{BM}$ |
|---|---|---|---|---|---|---|---|---|---|
| | C | Si | Mn | Ni | Cr | Mo | | | |
| A | 0.08 | 0.70 | 1.60 | - | - | - | 590 | 204.2 | 0.35 |
| B | 0.10 | 1.50 | 2.10 | - | - | - | 980 | 162.5 | 0.45 |
| C | 0.17 | 1.35 | 2.00 | - | - | - | 980 | 148.8 | 0.50 |
| D | 0.21 | 1.85 | 2.10 | - | - | - | 980 | 121.7 | 0.56 |
| E | 0.19 | 2.00 | 2.60 | - | - | - | 1180 | 107.4 | 0.62 |
| F | 0.16 | 0.00 | 0.95 | - | - | - | 440 | 222.1 | 0.32 |

<Nos. 1 to 61>

In each of the examples, arc welding was performed on two steel sheets by using a welding wire under the welding conditions shown in Tables 4 and 5. The steel grade and the sheet thickness of the steel sheets are shown in Tables 2 and 3. The composition of the welding wire is shown in Tables 2 and 3. Note that the shielding gas used was a gas mixture of Ar + 20 vol% $CO_2$. Furthermore, Tables 2 and 3 also show $X_{BM}$ and the carbon equivalent $Ceq_{BM}$ of the steel sheet. In addition, in Tables 2 and 3, "-" indicates that the content of the component was at a level that is considered an impurity.

Furthermore, Tables 2 and 3 also show $X_W$, which is calculated according to $300-279[C]_W - 25[Si]_W - 35[Mn]_W - 49[Ni]_W - 47[Cr]_W - 61[Mo]_W$. Note that $[C]_W$, $[Si]_W$, $[Mn]_W$, $[Ni]_W$, $[Cr]_W$, and $[Mo]_W$ represent, respectively, the contents (mass%) of C, Si, Mn, Ni, Cr, and Mo in the welding wire.

In addition, for each of the examples, Table 2 shows X, which is calculated from $X_W$ and $X_{BM}$ according to Equation (1') below.

$$X = 0.8X_W + 0.2X_{BM} \quad (1')$$

Furthermore, the carbon equivalent Ceqw of the steel sheet used in each of the examples was calculated according to Equation (3) below and is also shown in Tables 2 and 3.

$$Ceqw = [C]_W + [Mn]_W/6 + ([Cu]_W + [Ni]_W)/15 + ([Cr]_W + [Mo]_W + [V]_W)/5 \quad (3)$$

(Here, $[C]_W$, $[Mn]_W$, $[Cu]_W$, $[Ni]_W$, $[Cr]_W$, $[Mo]_W$, and $[V]_W$ represent, respectively, the contents (mass%) of C, Mn, Cu, Ni, Cr, Mo, and V in the welding wire.)

(Evaluation of mechanical properties)

For each of the examples, a delayed fracture (hydrogen embrittlement) susceptibility of the welded joint was evaluated by conducting an SSRT (Slow Strain Rate Technique) test, which is described below.

Specifically, for linear welding, a test specimen was prepared by cutting a parallel portion having a width of 15 mm from the welded joint of each of the examples. A tensile test was conducted to measure a breaking strength (non-charge breaking strength) of the test specimen. Furthermore, a test specimen, which was cut from the welded joint in a similar manner, was charged with hydrogen by being immersed in a hydrochloric acid solution having a pH of 3 for 100 hours, and subsequently, a tensile test was conducted in a similar manner to measure a breaking strength (post-charge breaking strength).

Furthermore, for point welding, a test specimen was prepared as follows. A steel sheet (upper sheet) having holes drilled at opposite ends and also having a hole provided in a middle portion and a steel sheet (lower sheet) having holes drilled at opposite ends were placed on top of each other crosswise, in a manner such that the upper sheet was positioned on the upper side, and the middle portion of the upper sheet in which the hole was provided was the overlapping portion. Arc-spot welding was performed on the overlapping middle portion. The arc was applied from a position at a height of 15 mm relative to the surface of the upper sheet. A CTS test (cross tension test) was conducted on the prepared test specimen to measure a breaking strength (non-charge breaking strength). In the CTS test, jigs were secured to the holes provided at opposite ends of both the upper sheet and the lower sheet, and the upper sheet and the lower sheet were pulled in opposite vertical directions. Furthermore, a test specimen was charged with hydrogen by being immersed in a hydrochloric acid solution having a pH of 3 for 100 hours, and subsequently, a CTS test (cross tension test) was conducted in a similar manner to measure a breaking strength (post-charge breaking strength).

A breaking strength ratio of the welded joint of each of the examples was calculated from the measured non-charge breaking strength and the post-charge breaking strength, according to the following equation.

$$\text{Breaking load ratio} = (\text{post-charge breaking strength})/(\text{non-charge breaking strength})$$

Evaluations were made as follows: welded joints having a breaking load ratio of less than or equal to 0.5 were rated as "×"; 0.5 to 0.7 as "Δ"; 0.7 to 0.9 as "○"; and greater than or equal to 0.9 as "⊙". Welded joints having the rating of ⊙ or ○ were rated as "pass". The results are shown in Tables 4 and 5.

(Evaluation of weld cracking)

For each of the examples, weld cracking was evaluated by visually observing a surface and a macroscopic cross section of the weld bead. Evaluation criteria were as follows: weld beads that exhibited no cracking were rated as "○"; and weld beads that exhibited cracking as "×". Weld beads having the rating of ○ were rated as "pass". The results are shown in Tables 4 and 5.

[Table 2]

Table 2

| No | Welding wire | | | | | | | | | | Steel sheet | | | | X |
|---|---|---|---|---|---|---|---|---|---|---|---|---|---|---|---|
| | Composition of welding wire (mass%) (Balance is Fe and incidental impurities) | | | | | | | | $X_W$ | $Ceq_W$ | Steel grade | $X_{BM}$ | Sheet thickness (mm) | $Ceq_{BM}$ | |
| | C | Si | Mn | Ni | Cr | Mo | Others | Ni+Cr | | | | | | | |
| 1 | 0.08 | 0.70 | 1.20 | 1.00 | - | 0.50 | - | 1.00 | 138.7 | 0.45 | A | 204.2 | 1.60 | 0.35 | 151.8 |
| 2 | 0.08 | 0.30 | 0.70 | - | 1.50 | 0.50 | - | 1.50 | 144.7 | 0.60 | C | 148.8 | 1.60 | 0.50 | 145.5 |
| 3 | 0.08 | 0.30 | 1.00 | - | 5.50 | 0.50 | - | 5.50 | -53.8 | 1.45 | B | 162.5 | 1.60 | 0.45 | -10.5 |
| 4 | 0.07 | 0.30 | 1.50 | 1.00 | 0.20 | 0.50 | - | 1.20 | 131.6 | 0.53 | B | 162.5 | 1.60 | 0.45 | 137.8 |
| 5 | 0.08 | 0.30 | 1.30 | 2.20 | 0.25 | 0.50 | - | 2.45 | 74.6 | 0.59 | B | 162.5 | 1.60 | 0.45 | 92.2 |
| 6 | 0.06 | 0.30 | 1.50 | 3.00 | 0.80 | 1.00 | - | 3.80 | -22.3 | 0.87 | B | 162.5 | 1.60 | 0.45 | 14.7 |
| 7 | 0.05 | 2.00 | 0.50 | - | 1.80 | - | - | 1.80 | 134.0 | 0.49 | B | 162.5 | 1.60 | 0.45 | 139.7 |
| 8 | 0.30 | 0.30 | 0.50 | - | 1.50 | 0.50 | - | 1.50 | 90.3 | 0.78 | C | 148.8 | 1.60 | 0.50 | 102.0 |
| 9 | 0.50 | 0.30 | 0.70 | - | 1.20 | 0.50 | - | 1.20 | 41.6 | 0.96 | B | 162.5 | 1.60 | 0.45 | 65.8 |
| 10 | 0.02 | 0.30 | 0.50 | 0.60 | 0.70 | - | - | 1.30 | 207.1 | 0.28 | B | 162.5 | 1.60 | 0.45 | 198.2 |
| 11 | 0.01 | 0.70 | 1.50 | 0.80 | 4.20 | 0.50 | - | 5.00 | -39.9 | 1.25 | B | 162.5 | 1.60 | 0.45 | 0.6 |
| 12 | 0.07 | 0.10 | 2.50 | 0.50 | 1.50 | 1.00 | - | 2.00 | 34.5 | 1.02 | B | 162.5 | 1.60 | 0.45 | 60.1 |
| 13 | 0.07 | | 2.30 | - | 1.80 | 1.00 | - | 1.80 | 54.4 | 1.01 | B | 162.5 | 1.60 | 0.45 | 76.0 |
| 14 | 0.07 | 0.70 | 0.40 | - | 1.80 | 0.50 | - | 1.80 | 133.9 | 0.30 | B | 162.5 | 1.60 | 0.45 | 139.6 |
| 15 | 0.07 | 0.30 | 2.70 | - | 1.80 | 0.50 | - | 1.80 | 63.4 | 0.98 | B | 162.5 | 1.60 | 0.45 | 83.2 |
| 16 | 0.02 | 0.10 | 0.50 | - | 1.50 | 1.60 | - | 1.50 | 106.3 | 0.72 | E | 107.4 | 1.60 | 0.62 | 106.5 |
| 17 | 0.02 | 0.10 | 0.50 | - | 1.50 | 1.50 | - | 1.50 | 112.4 | 0.70 | E | 107.4 | 1.60 | 0.62 | 111.4 |
| 18 | 0.02 | 0.30 | 0.70 | - | 1.00 | 0.50 | - | 1.00 | 184.9 | 0.44 | F | 222.1 | 1.60 | 0.32 | 192.4 |
| 19 | 0.08 | 0.30 | 0.70 | - | 1.50 | 0.50 | - | 1.50 | 144.7 | 0.60 | D | 121.7 | 1.60 | 0.56 | 140.1 |
| 20 | 0.08 | 2.10 | 0.50 | - | 1.20 | 0.50 | - | 1.20 | 120.8 | 0.50 | B | 162.5 | 1.60 | 0.45 | 129.1 |
| 21 | 0.08 | 0.30 | 0.70 | 9.50 | - | - | - | 9.50 | -219.8 | 0.82 | B | 162.5 | 1.60 | 0.45 | -143.4 |
| 22 | 0.08 | 0.30 | 0.70 | - | 9.50 | - | - | 9.50 | -200.8 | 2.10 | B | 162.5 | 1.60 | 0.45 | -128.2 |

(continued)

| No | Welding wire | | | | | | | | | | Steel sheet | | | | X |
|---|---|---|---|---|---|---|---|---|---|---|---|---|---|---|---|
| | Composition of welding wire (mass%) (Balance is Fe and incidental impurities) | | | | | | | | $X_W$ | $Ceq_W$ | Steel grade | $X_{BM}$ | Sheet thickness (mm) | $Ceq_{BM}$ | |
| | C | Si | Mn | Ni | Cr | Mo | Others | Ni+Cr | | | | | | | |
| 23 | 0.08 | 0.30 | 0.70 | 12.00 | 7.00 | 0.50 | - | 19.00 | -701.8 | 2.50 | E | 107.4 | 1.60 | 0.62 | -540.0 |
| 24 | 0.08 | 0.30 | 0.70 | 9.00 | 12.00 | 0.50 | - | 21.00 | -789.8 | 3.30 | E | 107.4 | 1.60 | 0.62 | -610.4 |
| 25 | 0.08 | 0.30 | 0.70 | - | 1.50 | 0.50 | Ti:0.05 | 1.50 | 144.7 | 0.60 | B | 162.5 | 1.60 | 0.45 | 148.2 |
| 26 | 0.08 | 0.30 | 0.70 | - | 1.50 | 0.50 | Ti:0.50 | 1.50 | 144.7 | 0.60 | B | 162.5 | 1.60 | 0.45 | 148.2 |
| 27 | 0.08 | 0.30 | 0.70 | - | 1.50 | 0.50 | V:0.50 | 1.50 | 144.7 | 0.60 | E | 107.4 | 1.60 | 0.62 | 137.2 |
| 28 | 0.08 | 0.30 | 0.70 | - | 1.50 | 0.50 | V:1.00 | 1.50 | 144.7 | 0.60 | E | 107.4 | 1.60 | 0.62 | 137.2 |
| 29 | 0.08 | 0.30 | 0.70 | - | 1.50 | 0.50 | Nb:0.50 | 1.50 | 144.7 | 0.60 | E | 107.4 | 1.60 | 0.62 | 137.2 |
| 30 | 0.08 | 0.30 | 0.70 | - | 1.50 | 0.50 | Nb:1.00 | 1.50 | 144.7 | 0.60 | E | 107.4 | 1.60 | 0.62 | 137.2 |
| 31 | 0.08 | 0.30 | 0.70 | - | 1.50 | 0.50 | Zr:0.05 | 1.50 | 144.7 | 0.60 | B | 162.5 | 1.60 | 0.45 | 148.2 |
| 32 | 0.08 | 0.30 | 0.70 | - | 1.50 | 0.50 | Zr:0.50 | 1.50 | 144.7 | 0.60 | B | 162.5 | 1.60 | 0.45 | 148.2 |
| 33 | 0.08 | 0.30 | 0.70 | - | 1.50 | 0.50 | W:0.50 | 1.50 | 144.7 | 0.60 | E | 107.4 | 1.60 | 0.62 | 137.2 |
| 34 | 0.08 | 0.30 | 0.70 | - | 1.50 | 0.50 | W:1.00 | 1.50 | 144.7 | 0.60 | E | 107.4 | 1.60 | 0.62 | 137.2 |
| 35 | 0.08 | 0.30 | 0.70 | - | 1.50 | 0.50 | B:0.0050 | 1.50 | 144.7 | 0.60 | B | 162.5 | 1.60 | 0.45 | 148.2 |

[Table 3]

Table 3

| No | Welding wire | | | | | | | | | | Steel sheet | | | | X |
| | Composition of welding wire (mass%) (Balance is Fe and incidental impurities) | | | | | | | | $X_W$ | $Ceq_W$ | Steel grade | $X_{BM}$ | Sheet thickness (mm) | $Ceq_{BM}$ | |
| | C | Si | Mn | Ni | Cr | Mo | Others | Ni+Cr | | | | | | | |
|----|------|------|------|------|------|------|--------|-------|-------|------|----|-------|------|------|-------|
| 36 | 0.08 | 0.30 | 0.70 | - | 1.50 | 0.50 | - | 1.50 | 144.7 | 0.60 | B | 162.5 | 0.60 | 0.45 | 148.2 |
| 37 | 0.08 | 0.30 | 0.70 | - | 1.50 | 0.50 | - | 1.50 | 144.7 | 0.60 | B | 162.5 | 4.00 | 0.45 | 148.2 |
| 38 | 0.08 | 0.30 | 0.70 | - | 1.50 | 0.50 | - | 1.50 | 144.7 | 0.60 | B | 162.5 | 0.40 | 0.45 | 148.2 |
| 39 | 0.08 | 0.30 | 0.70 | - | 1.50 | 0.50 | - | 1.50 | 144.7 | 0.60 | B | 162.5 | 5.00 | 0.45 | 148.2 |
| 40 | 0.08 | 0.30 | 0.70 | - | 1.50 | 0.50 | - | 1.50 | 144.7 | 0.60 | B | 162.5 | 0.80 | 0.45 | 148.2 |
| 41 | 0.08 | 0.30 | 0.70 | - | 1.50 | 0.50 | - | 1.50 | 144.7 | 0.60 | B | 162.5 | 0.80 | 0.45 | 148.2 |
| 42 | 0.08 | 0.30 | 0.70 | - | 1.50 | 0.50 | - | 1.50 | 144.7 | 0.60 | B | 162.5 | 3.00 | 0.45 | 148.2 |
| 43 | 0.08 | 0.30 | 0.70 | - | 1.50 | 0.50 | - | 1.50 | 144.7 | 0.60 | B | 162.5 | 3.00 | 0.45 | 148.2 |
| 44 | 0.08 | 0.30 | 0.70 | - | 1.50 | 0.50 | - | 1.50 | 144.7 | 0.60 | B | 162.5 | 4.00 | 0.45 | 148.2 |
| 45 | 0.08 | 0.30 | 0.70 | - | 1.50 | 0.50 | - | 1.50 | 144.7 | 0.60 | B | 162.5 | 1.60 | 0.45 | 148.2 |
| 46 | 0.08 | 0.30 | 0.70 | - | 1.50 | 0.50 | - | 1.50 | 144.7 | 0.60 | B | 162.5 | 1.60 | 0.45 | 148.2 |
| 47 | 0.08 | 0.30 | 0.70 | - | 1.50 | 0.50 | - | 1.50 | 144.7 | 0.60 | B | 162.5 | 1.00 | 0.45 | 148.2 |
| 48 | 0.08 | 0.30 | 0.70 | - | 1.50 | 0.50 | - | 1.50 | 144.7 | 0.60 | B | 162.5 | 1.00 | 0.45 | 148.2 |
| 49 | 0.08 | 0.30 | 0.70 | - | 1.50 | 0.50 | - | 1.50 | 144.7 | 0.60 | B | 162.5 | 1.60 | 0.45 | 148.2 |
| 50 | 0.08 | 0.30 | 0.70 | - | 1.50 | 0.50 | - | 1.50 | 144.7 | 0.60 | B | 162.5 | 4.00 | 0.45 | 148.2 |
| 51 | 0.08 | 0.30 | 0.70 | - | 1.50 | 0.50 | - | 1.50 | 144.7 | 0.60 | B | 162.5 | 4.00 | 0.45 | 148.2 |
| 52 | 0.08 | 0.30 | 0.70 | - | 1.50 | 0.50 | - | 1.50 | 144.7 | 0.60 | B | 162.5 | 0.50 | 0.45 | 148.2 |
| 53 | 0.08 | 0.30 | 0.70 | - | 1.50 | 0.50 | - | 1.50 | 144.7 | 0.60 | B | 162.5 | 0.50 | 0.45 | 148.2 |
| 54 | 0.08 | 0.30 | 0.70 | - | 1.50 | 0.50 | - | 1.50 | 144.7 | 0.60 | B | 162.5 | 0.30 | 0.45 | 148.2 |
| 55 | 0.08 | 0.30 | 0.70 | - | - | 0.50 | - | 0.00 | 215.2 | 0.30 | B | 162.5 | 1.30 | 0.45 | 204.6 |
| 56 | 0.08 | 0.30 | 0.70 | 0.20 | 0.20 | 0.50 | - | 0.40 | 196.0 | 0.35 | B | 162.5 | 2.30 | 0.45 | 189.3 |
| 57 | 0.08 | 0.30 | 0.70 | 0.30 | 0.60 | 0.50 | - | 0.90 | 172.3 | 0.44 | B | 162.5 | 3.30 | 0.45 | 170.3 |

13

EP 3 620 256 A1

(continued)

| No | Welding wire | | | | | | | | | | Steel sheet | | | | X |
|---|---|---|---|---|---|---|---|---|---|---|---|---|---|---|---|
| | Composition of welding wire (mass%) (Balance is Fe and incidental impurities) | | | | | | | | $X_W$ | $Ceq_W$ | Steel grade | $X_{BM}$ | Sheet thickness (mm) | $Ceq_{BM}$ | |
| | C | Si | Mn | Ni | Cr | Mo | Others | Ni+Cr | | | | | | | |
| 58 | 0.02 | 0.30 | 0.30 | 0.50 | 0.50 | 0.10 | - | 1.00 | 222.3 | 0.22 | B | 162.5 | 4.30 | 0.45 | 210.4 |
| 59 | 0.08 | 0.30 | 0.70 | - | - | 0.50 | - | 0.00 | 215.2 | 0.30 | B | 162.5 | 4.30 | 0.45 | 204.6 |
| 60 | 0.08 | 0.30 | 0.70 | 0.30 | 0.60 | 0.50 | - | 0.90 | 172.3 | 0.44 | B | 162.5 | 5.30 | 0.45 | 170.3 |
| 61 | 0.02 | 0.10 | 0.30 | 0.50 | 0.50 | 0.10 | - | 1.00 | 227.3 | 0.22 | B | 162.5 | 6.30 | 0.45 | 214.4 |

[Table 4]

[Table 4]

Table 4

| No | Welding conditions | | | | | | Test results | | |
|---|---|---|---|---|---|---|---|---|---|
| | Welding method | Welding current (A) | Welding voltage (V) | Welding speed (cm/min) | Heat input (kJ/cm) | Welding time (sec) | Mechanical properties (evaluation of breaking load ratio) | Weld cracking (No: ○, Yes: ×) | Others (e.g., bead appearance and weldability) |
| 1 | Point welding | 150 | 17 | - | - | 0.4 | ⊙ | ○ | - |
| 2 | Point welding | 150 | 17 | - | - | 0.4 | ⊙ | ○ | - |
| 3 | Point welding | 150 | 17 | - | - | 0.4 | ○ | ○ | - |
| 4 | Point welding | 150 | 17 | - | - | 0.4 | ⊙ | ○ | - |
| 5 | Point welding | 150 | 17 | - | - | 0.4 | ○ | ○ | - |
| 6 | Point welding | 150 | 17 | - | - | 0.4 | ○ | ○ | - |
| 7 | Point welding | 150 | 17 | - | - | 0.4 | ⊙ | ○ | - |
| 8 | Point welding | 150 | 17 | - | - | 0.4 | ⊙ | ○ | - |
| 9 | Point welding | 150 | 17 | - | - | 0.4 | ○ | ○ | - |
| 10 | Point welding | 150 | 17 | - | - | 0.4 | ⊙ | ○ | - |
| 11 | Point welding | 150 | 17 | - | - | 0.4 | ⊙ | ○ | - |
| 12 | Point welding | 150 | 17 | - | - | 0.4 | ○ | ○ | - |
| 13 | Point welding | 150 | 17 | - | - | 0.4 | ○ | ○ | - |

(continued)

| No | Welding conditions | | | | | | Test results | | |
|---|---|---|---|---|---|---|---|---|---|
| | Welding method | Welding current (A) | Welding voltage (V) | Welding speed (cm/min) | Heat input (kJ/cm) | Welding time (sec) | Mechanical properties (evaluation of breaking load ratio) | Weld cracking (No: ○, Yes: ×) | Others (e.g., bead appearance and weldability) |
| 14 | Point welding | 150 | 17 | - | - | 0.4 | ⊙ | ○ | - |
| 15 | Point welding | 150 | 17 | - | - | 0.4 | ○ | ○ | Slag increased |
| 16 | Point welding | 150 | 17 | - | - | 0.4 | ⊙ | ○ | - |
| 17 | Point welding | 150 | 17 | - | - | 0.4 | ⊙ | ○ | - |
| 18 | Point welding | 150 | 17 | - | - | 0.4 | ⊙ | ○ | - |
| 19 | Point welding | 150 | 17 | - | - | 0.4 | ⊙ | ○ | - |
| 20 | Point welding | 150 | 17 | - | - | 0.4 | ⊙ | ○ | Slag increased |
| 21 | Point welding | 150 | 17 | - | - | 0.4 | ○ | ○ | - |
| 22 | Point welding | 150 | 17 | - | - | 0.4 | ○ | ○ | - |
| 23 | Point welding | 150 | 17 | - | - | 0.4 | ○ | ○ | - |
| 24 | Point welding | 150 | 17 | - | - | 0.4 | ○ | ○ | - |
| 25 | Point welding | 150 | 17 | - | - | 0.4 | ⊙ | ○ | - |
| 26 | Point welding | 150 | 17 | - | - | 0.4 | ⊙ | ○ | - |

(continued)

| No | Welding conditions | | | | | | Test results | | |
|---|---|---|---|---|---|---|---|---|---|
| | Welding method | Welding current (A) | Welding voltage (V) | Welding speed (cm/min) | Heat input (kJ/cm) | Welding time (sec) | Mechanical properties (evaluation of breaking load ratio) | Weld cracking (No: ○, Yes: ×) | Others (e.g., bead appearance and weldability) |
| 27 | Point welding | 150 | 17 | - | - | 0.4 | ⊙ | ○ | - |
| 28 | Point welding | 150 | 17 | - | - | 0.4 | ⊙ | ○ | - |
| 29 | Point welding | 150 | 17 | - | - | 0.4 | ⊙ | ○ | - |
| 30 | Point welding | 150 | 17 | - | - | 0.4 | ⊙ | ○ | - |
| 31 | Point welding | 150 | 17 | - | - | 0.4 | ⊙ | ○ | - |
| 32 | Point welding | 150 | 17 | - | - | 0.4 | ⊙ | ○ | - |
| 33 | Point welding | 150 | 17 | - | - | 0.4 | ⊙ | ○ | - |
| 34 | Point welding | 150 | 17 | - | - | 0.4 | ⊙ | ○ | - |
| 35 | Point welding | 150 | 17 | - | - | 0.4 | ⊙ | ○ | - |

[Table 5]

[Table 5]

Table 5

| No | Welding conditions | | | | | | Test results | | |
|---|---|---|---|---|---|---|---|---|---|
| | Welding method | Welding current (A) | Welding voltage (V) | Welding speed (cm/min) | Heat input (kJ/cm) | Welding time (sec) | Mechanical properties (evaluation of breaking load ratio) | Weld cracking (No: ○, Yes: ×) | Others (e.g., bead appearance and weldability) |
| 36 | Point welding | 150 | 17 | - | - | 0.2 | ⊙ | ○ | - |
| 37 | Point welding | 250 | 23 | - | - | 3.0 | ⊙ | ○ | - |
| 38 | Point welding | 150 | 17 | - | - | 0.1 | ○ | ○ | - |
| 39 | Point welding | 250 | 23 | - | - | 4.0 | ○ | ○ | - |
| 40 | Point welding | 150 | 17 | - | - | 0.2 | ⊙ | ○ | - |
| 41 | Point welding | 150 | 17 | - | - | 0.1 | ○ | ○ | - |
| 42 | Point welding | 150 | 17 | - | - | 2.0 | ⊙ | ○ | - |
| 43 | Point welding | 150 | 17 | - | - | 4.0 | ⊙ | ○ | - |
| 44 | Point welding | 150 | 17 | - | - | 6.0 | ○ | ○ | - |
| 45 | Linear welding | 150 | 17 | 45 | 3.40 | - | ⊙ | ○ | - |
| 46 | Linear welding | 150 | 17 | 30 | 5.10 | - | ○ | ○ | - |
| 47 | Linear welding | 250 | 23 | 150 | 2.30 | - | ⊙ | ○ | - |
| 48 | Linear welding | 250 | 23 | 160 | 2.16 | - | ○ | ○ | - |

(continued)

| No | Welding conditions | | | | | | Test results | | |
|---|---|---|---|---|---|---|---|---|---|
| | Welding method | Welding current (A) | Welding voltage (V) | Welding speed (cm/min) | Heat input (kJ/cm) | Welding time (sec) | Mechanical properties (evaluation of breaking load ratio) | Weld cracking (No: ○, Yes: ×) | Others (e.g., bead appearance and weldability) |
| 49 | Linear welding | 200 | 21 | 60 | 4.20 | - | ⊙ | ○ | - |
| 50 | Linear welding | 250 | 26 | 25 | 15.60 | - | ○ | ○ | - |
| 51 | Linear welding | 260 | 27 | 30 | 14.04 | - | ⊙ | ○ | - |
| 52 | Linear welding | 100 | 12 | 80 | 0.90 | - | ⊙ | ○ | - |
| 53 | Linear welding | 80 | 10 | 80 | 0.60 | - | ⊙ | ○ | - |
| 54 | Linear welding | 80 | 10 | 100 | 0.48 | - | ⊙ | ○ | - |
| 55 | Point welding | 150 | 17 | - | - | 0.4 | × | × | - |
| 56 | Point welding | 150 | 17 | - | - | 0.4 | Δ | × | - |
| 57 | Point welding | 150 | 17 | - | - | 0.4 | Δ | × | - |
| 58 | Point welding | 150 | 17 | - | - | 0.4 | × | × | - |
| 59 | Linear welding | 200 | 21 | 60 | 4.2 | - | × | × | - |
| 60 | Linear welding | 200 | 21 | 60 | 4.2 | - | Δ | × | - |
| 61 | Linear welding | 200 | 21 | 60 | 4.2 | - | × | × | - |

Examples 1 to 54 are examples, and Examples 55 to 61 are comparative examples.

Examples 1 to 54, in each of which the total content of Cr and Ni in the welding wire was greater than or equal to 1.0 mass%, and arc welding was performed under conditions in which X was less than or equal to 200, were rated as ⊙ or ○ for the breaking load ratio and exhibited no weld cracking.

In contrast, Example 55, in which a welding wire containing no Cr or Ni added thereto was used, and arc welding was performed under conditions in which X was greater than 200, was rated as × for the breaking load ratio and exhibited weld cracking.

Furthermore, Examples 56 and 57, in which the total contents of Cr and Ni in the welding wire were as low as 0.4 mass% and 0.9 mass%, respectively, were rated as Δ for the breaking load ratio and exhibited weld cracking.

Furthermore, Example 58, in which arc welding was performed under conditions in which X was greater than 200, were rated as × for the breaking load ratio and exhibited weld cracking.

Furthermore, Example 59, in which a welding wire containing no Cr or Ni added thereto was used, and arc welding was performed under conditions in which X was greater than 200, was rated as × for the breaking load ratio and exhibited weld cracking.

Furthermore, Examples 60, in which the total content of Cr and Ni in the welding wire was as low as 0.9 mass%, was rated as Δ for the breaking load ratio and exhibited weld cracking.

Furthermore, Example 61, in which arc welding was performed under conditions in which X was greater than 200, were rated as × for the breaking load ratio and exhibited weld cracking.

Although the present invention has been described in detail with reference to particular aspects, it will be apparent to those skilled in the art that various changes and modifications may be made thereto without departing from the spirit and scope of the present invention.

The present application is based on a Japanese patent application (Japanese Patent Application No. 2017-091376) filed May 1st, 2017, the disclosure of which is incorporated by reference herein in its entirety.

**Claims**

1. An arc welding method for arc welding a steel sheet having a C content of 0.08 to 0.30 mass%, the arc welding method comprising performing welding by using a welding wire in which a total content of Cr and Ni is greater than or equal to 1.00 mass% and under conditions in which X is less than or equal to 200, X being represented by Equation (1) below:

$$X = 0.8 \times (300 - 279[C]_W - 25[Si]_W - 35[Mn]_W - 49[Ni]_W - 47[Cr]_W - 61[Mo]_W) + 0.2 \times (300 - 279[C]_{BM} - 25[Si]_{BM} - 35[Mn]_{BM} - 49[Ni]_{BM} - 47[Cr]_{BM} - 61[Mo]_{BM}) \quad (1)$$

(where $[C]_W$, $[Si]_W$, $[Mn]_W$, $[Ni]_W$, $[Cr]_W$, and $[Mo]_W$ represent, respectively, contents (mass%) of C, Si, Mn, Ni, Cr, and Mo in the welding wire, and $[C]_{BM}$, $[Si]_{BM}$, $[Mn]_{BM}$, $[Ni]_{BM}$, $[Cr]_{BM}$, and $[MO]_{BM}$ represent, respectively, contents (mass%) of C, Si, Mn, Ni, Cr, and Mo in the steel sheet.)

2. The arc welding method according to Claim 1, wherein X is greater than or equal to 0.

3. The arc welding method according to Claim 1, wherein a carbon equivalent $Ceq_{BM}$ of the steel sheet is 0.30 to 0.70, and
a carbon equivalent $Ceq_W$ of the welding wire is 0.20 to 1.30, the carbon equivalent $Ceq_{BM}$ being represented by equation (2) below, the carbon equivalent $Ceq_W$ being represented by equation (3) below:

$$Ceq_{BM} = [C]_{BM} + [Mn]_{BM}/6 + ([Cu]_{BM} + [Ni]_{BM})/15 + ([Cr]_{BM} + [Mo]_{BM} + [V]_{BM})/5 \quad (2)$$

(where $[C]_{BM}$, $[Mn]_{BM}$, $[Cu]_{BM}$, $[Ni]_{BM}$, $[Cr]_{BM}$, $[Mo]_{BM}$, and $[V]_{BM}$ represent, respectively, the contents (mass%) of C, Mn, Cu, Ni, Cr, Mo, and V in the steel sheet,)

$$Ceq_W = [C]_W + [Mn]_W/6 + ([Cu]_W + [Ni]_W)/15 + ([Cr]_W + [Mo]_W + [V]_W)/5 \quad (3)$$

(where $[C]_W$, $[Mn]_W$, $[Cu]_W$, $[Ni]_W$, $[Cr]_W$, $[Mo]_W$, and $[V]_W$ represent, respectively, the contents (mass%) of C, Mn, Cu, Ni, Cr, Mo, and V in the welding wire.)

4. The arc welding method according to Claim 1, wherein the steel sheet has a sheet thickness of 0.5 mm or greater and 4.0 mm or less.

5. The arc welding method according to any one of Claims 1 to 4, wherein, to obtain a weld length of greater than 20 mm, linear welding is performed under conditions in which a welding heat input is 0.3 kJ/cm or greater and 15 kJ/cm or less.

6. The arc welding method according to Claim 5, wherein the linear welding is performed under conditions in which a welding speed is 45 cm/minute or greater and 150 cm/minute or less.

7. The arc welding method according to any one of Claims 1 to 4, wherein point welding is performed under conditions in which a welding time is 0.2 seconds or greater and 4.0 seconds or less.

8. A welding wire for arc welding a steel sheet containing at least, in mass%, C: 0.08 to 0.30 %, Si: 2.00 % or less, and Mn: 0.90 to 3.00 %, with a balance of Fe and incidental impurities,
the welding wire comprising, in mass%, relative to a total mass of the wire,

   C: 0.08 to 0.30 %,
   Si: 0.10 to 2.00 %,
   Mn: 0.50 to 2.50 %,
   Ni: 12.00 % or less,
   Cr: 12.00 % or less, and
   Mo: 1.50 % or less, with a balance of Fe and incidental impurities, wherein

a total content of Cr and Ni is 1.00 to 24.00 %, and
the welding wire satisfies a condition that X is 0.6 or greater and 200 or less, X being represented by Equation (1) below:

$$X = 0.8 \times (300 - 279[C]_W - 25[Si]_W - 35[Mn]_W - 49[Ni]_W - 47[Cr]_W - 61[Mo]_W) + 0.2 \times$$
$$(300 - 279[C]_{BM} - 25[Si]_{BM} - 35[Mn]_{BM} - 49[Ni]_{BM} - 47[Cr]_{BM} - 61[Mo]_{BM}) \quad (1)$$

(where $[C]_W$, $[Si]_W$, $[Mn]_W$, $[Ni]_W$, $[Cr]_W$, and $[Mo]_W$ represent, respectively, contents (mass%) of C, Si, Mn, Ni, Cr, and Mo in the welding wire, and $[C]_{BM}$, $[Si]_{BM}$, $[Mn]_{BM}$, $[Ni]_{BM}$, $[Cr]_{BM}$, and $[MO]_{BM}$ represent, respectively, contents (mass%) of C, Si, Mn, Ni, Cr, and Mo in the steel sheet.)

9. The welding wire according to Claim 8, further comprising, in mass%, at least one selected from the group consisting of

   Ti: 0.50 % or less,
   V: 1.00 % or less,
   Nb: 1.00 % or less,
   Zr: 0.50 % or less,
   W: 1.00 % or less, and
   B: 0.0050 % or less.

<div align="center">

**INTERNATIONAL SEARCH REPORT**

</div>

| International application No. |
|---|
| PCT/JP2018/017106 |

| A. CLASSIFICATION OF SUBJECT MATTER |
|---|
| Int.Cl. B23K35/30(2006.01)i, B23K9/23(2006.01)i, C22C38/00(2006.01)i, C22C38/04(2006.01)i |

According to International Patent Classification (IPC) or to both national classification and IPC

| B. FIELDS SEARCHED |
|---|
| Minimum documentation searched (classification system followed by classification symbols) <br> Int.Cl. B23K35/30, B23K9/23, C22C38/00, C22C38/04 |

| Documentation searched other than minimum documentation to the extent that such documents are included in the fields searched | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X <br> A | WO 2017/018492 A1 (NIPPON STEEL & SUMITOMO METAL CORPORATION) 02 February 2017, paragraphs [0054]-[0075] & KR 10-2018-0019214 A & CN 108025401 A | 1-7 <br> 8-9 |
| X <br> A | JP 2002-224834 A (KAWASAKI STEEL CORP.) 13 August 2002, paragraphs [0035]-[0039] (Family: none) | 1-7 <br> 8-9 |
| X <br> Y <br> A | JP 2012-213803 A (JFE STEEL CORPORATION) 08 November 2012, paragraphs [0047], [0050]-[0060] (Family: none) | 1-7 <br> 9 <br> 8 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 July 2018 (11.07.2018) | 24 July 2018 (24.07.2018) |

| Name and mailing address of the ISA/ <br> Japan Patent Office <br> 3-4-3, Kasumigaseki, Chiyoda-ku, <br> Tokyo 100-8915, Japan | Authorized officer |
|---|---|
| | Telephone No. |

Form PCT/ISA/210 (second sheet) (January 2015)

**INTERNATIONAL SEARCH REPORT**

| International application No. |
| --- |
| PCT/JP2018/017106 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>A | JP 2013-188771 A (NIPPON STEEL & SUMIKIN WELDING CO., LTD.)<br>26 September 2013, paragraphs [0030]-[0037] (Family: none) | 1-3<br>4-9 |
| X<br>Y | JP 2008-178910 A (NIPPON STEEL CORP.) 07 August 2008,<br>paragraphs [0054]-[0065] (Family: none) | 1-8<br>9 |
| X<br>A | JP 2015-110241 A (KOBE STEEL, LTD.) 18 June 2015, paragraphs<br>[0046]-[0067] & US 2015/0314400 A1, paragraphs [0152]-[0173]<br>& WO 2014/109402 A1 & EP 2944417 A1 & KR 10-2015-0087425 A &<br>CN 104955608 A | 1-3<br>4-9 |

Form PCT/ISA/210 (continuation of second sheet) (January 2015)

**EP 3 620 256 A1**

## REFERENCES CITED IN THE DESCRIPTION

### Patent documents cited in the description

- JP 2014171495 A
- JP 2013173179 A
- JP 2017091376 A